# EUROPEAN PATENT APPLICATION

(11) **EP 1 441 449 A1**
(43) Date of publication of application: **28.07.2004**
(21) Application number: 03250482.1
(22) Date of filing: 27.01.2003
(51) Int. Cl.: H04B 1/707

(54) **Programmable acquisition module for multi-standard CDMA based receivers**

(71) Applicant: Agilent Technologies, Inc. - a Delaware corporation -, Palo Alto, CA 94303-0870 (US)
(72) Inventor: Lugil, Nico, 3001 Heverlee (BE)
(74) Representative: Coker, David Graeme

(57) **Abstract**

The present invention is related to a Programmable Acquisition Module for the acquisition of synchronisation signals in a spread-spectrum communication system, comprising
- a matched filter with programmable length (1)
- accumulator with RAM (3), using input either directly from said matched filter or via the first energy calculation block
- hardware synchronisation counter (7) that supports the SW such that the HW acquisition process can be started at precise defined moments
- a dwell counter (8)
- an address generator (4)
all arranged for control or programming by a software controller,
- a first energy calculation block (2)
- a second energy calculation block (5) to calculate the energy of the accumulated values
- a maximum finder block (6) to find the maximum energy value of the accumulated values,
whereby the accumulator (3), connected with the matched filter (1) both directly and via the energy calculation block (2), is arranged for getting inputs from the address generator and the software controller,
**characterised in that** the module is configurable for the acquisition of
- codes with a length up to the matched filter's maximum length with non-coherent dwell,
- codes with a length up to the matched filter's maximum length with coherent dwell, and
- codes with a length larger than the matched filter's maximum length.

## Description

### Field of the invention

The present invention is related to a receiver structure for spread-spectrum communication systems, that allows a fast acquisition of certain signals.

### State of the art

Direct sequence (DS) spread-spectrum signals are a well known technique for the transmission of digital information. It allows many users to share the same bandwidth. The transmitted signals can be distinguished from one another by superimposing a different pseudo-random spreading code (PN code) in each transmitted signal. This technique is well known as Direct Sequence Code Division Multiple Access (DS-CDMA). To retrieve at the receiver side the original narrowband signal transmitted by a particular user the received signal has to be despread by multiplying with that user's PN code, which must be known at the receiver side. The signals from the other users thereby appear as an additive interference. For the system to operate properly, the despreading PN code sequence should be synchronised with the received signal. The synchronisation is realised in two stages, namely acquisition and tracking. In the acquisition step a coarse correction of the PN phase error between transmitter and receiver takes place. In the tracking stage small phase deviations between the received signal and the PN code sequence used, are detected and compensated for. The present invention relates to the acquisition stage.

A paper related to the present invention can be found in the Proceedings of the IEEE ISSSTA'96 Conference (pp.37-41):'Design of an ASIC for fast Signal recognition and Code Acquisition in DS-SS-CDMA receivers' by L. Fanucci.

### Aims of the invention

The present invention aims to provide a programmable device that allows fast acquisition of several CDMA signal types, i.e. a structure suitable for a multi-standard CDMA receiver.

### Summary of the invention

The present invention is related to a Programmable Acquisition Module for the acquisition of synchronisation signals in a spread-spectrum communication system, comprising
- a matched filter with programmable length,
- accumulator with RAM, using input either directly from the matched filter (coherent mode) or via the first energy calculation block (non-coherent mode),
- hardware synchronisation counter that supports the SW so that the HW acquisition process can be started at precise defined moments,
- a dwell counter,
- an address generator,
   all arranged for control or programming by a software controller,
- a first energy calculation block,
- a second energy calculation block to optionally calculate the energy of the accumulated values,
- a maximum finder block to find the maximum energy value of the accumulated values,
whereby the accumulator, connected with the matched filter both directly and via the energy calculation block, also is arranged for getting inputs from the address generator and the software controller, characterised in that the module is configurable for the acquisition of
- codes with a length up to the matched filter's maximum length with non-coherent dwell,
- codes with a length up to the matched filter's maximum length with coherent dwell,
- codes with a length larger than the matched filter's maximum length.

Advantageously the acquisition module is reconfigurable on the fly.

In a preferred embodiment, the present invention is related to a programmable acquisition module, characterised in that the module allows an acquisition of codes, selected from the group consisting of IMT-2000, 3GPP, 3GPP2, W-CDMA, UMTS/FDD, UMTS/TDD, 1xEV-DO, 1xEV-DV, CDMA2000, IS95, IS95A, IS95B, UWB, TD-SCDMA, LAS-CDMA, IEEE802.11, IEEE802.11A, IEEE802.11B, IEEE802.16 communications, GPS, Galileo, Glonass or GNSS.

In a specific embodiment of the present invention the programmable acquisition module of the present invention can be comprised in an integrated circuit.

In a specific embodiment of the present invention the programmable acquisition module of the present invention or an integrated circuit comprising it, is part of a receiver.

A method to perform the acquisition of a spread-spectrum signal, comprises the following steps:
- Receiving a signal selected from the group consisting of
   - codes with a length up to the matched filter's maximum length with non-coherent dwell
   - codes with a length up to the matched filter's maximum length with coherent dwell
   - codes with a length larger than the matched filter's maximum length
- Applying the signal to a module such as in claim 1 and configuring the module to the received code.

In an advantageous embodiment the step of configuring the module comprises setting the matched filter length, setting the dwell counter length, setting the synchronisation counter length, setting the accumulator length and setting the accumulator to coherent or non-coherent mode.

As another object the invention relates to a method to perform the acquisition of a code with a length larger than the matched filter length, comprising the following steps :
- Providing a programmable acquisition module as in claim 1,
- Splitting said code into several subcodes, each of a length maximally equal to the matched filter length, whereby a concatenation of all subcodes, X in total, again yields the original code,
- Setting the dwell counter to the number of subcodes,
- Setting the synchronisation counter to the search space length (most of the times the total code length)
- Investigating X hypotheses, each of which comprises the following steps :
   (a) Programming the matched filter, with the first subcode and also programming the matched filter length to the length of the first subcode,
   (b) Setting the accumulator length to the matched filter length,
   (c) Calculating the matched filter output and storing in the accumulator block
   (d) Switching, exactly after the length of the subcode, the code stored in the matched filter to the next subcode, and if needed change also the matched filter and accumulator length
   (e) Calculating the matched filter output and adding coherently in the accumulator,
   (f) Repeating steps (d-e) for all other subcodes,
   (g) Calculating the energy values, using the optional energy calculation block and finding the maximum energy value and the corresponding address for the hypothesis under investigation,
- The other X-1 hypotheses are obtained by cyclically shifting the order of the X subcodes,
- Finding the overall maximum energy value from the X maximum values resulting from the X hypotheses, and obtain the corresponding address and hypothesis number,
- Combining the address and hypothesis number to obtain the to be found PN phase.
During this process, some counters are used that support this process: a dwell counter to count the number of subcodes and hence to know when the accumulator RAM is complete and the maximum may be searched, a synchronisation counter to support the software so that all hypotheses can be started with the correct offset. The synchronisation counter will make sure that the actual hardware like matched filter, accumulation, etc, will only start at an integer number of times the search space (the software start will be synchronised to this counter).

As another object the invention relates to a method to perform the acquisition of a code with a length up to the matched filter length, comprising the following steps :
(a) Providing a programmable acquisition module as in claim 1,
(b) Setting the matched filter length to the code length and programming the matched filter with the PN code,
(c) Setting the accumulator to coherent or non-coherent mode and programming the accumulator length equal to the search space,
(d) Setting a number of dwells in the dwell counter,
(e) In the case of a non-coherent dwell: setting the accumulator to non-coherent mode and passing the matched filter output to the first energy calculation block, which produces the accumulator input,
(f) In the case of a coherent dwell the matched filter output is the accumulator input,
(g) Calculating the matched filter output during the time equal to the search space,
(h) Accumulating or storing (during the first dwell) the accumulator input,
(i) Steps (g-h) are repeated for every dwell,
(j) In the case of a coherent dwell calculating the energy values in the second energy calculation block,
(k) Finding the maximum energy and the corresponding address to be returned to the address generator.
A dwell counter will count the number of dwells and makes sure the correct number of dwells are accumulated. So this counter determines at which time step (j) is initiated.

### Short description of the drawings

Fig. 1 represents a block scheme of the invention.

Fig. 2 represents the signal in the UMTS FDD slot synchronisation example.

Fig. 3 represents a time diagram of the acquisition for UMTS FDD slot synchronisation.

Fig. 4 represents the signal in the GPS signal on the C/A code.

Fig. 5 represents the split up into 4 subcodes.

Fig. 6 represents a time diagram of the acquisition for the GPS signal.

### Detailed description of the invention

The invention is related to a programmable module for multi-standard CDMA based receivers that allows a fast acquisition. In this context 'fast' is to be related with the search space (this is for instance 1 PN code period). Generally speaking the fastest possible is when one can examine all possible phases during the duration of the search space, i.e. all possible phases are examined during the search space duration. More in particular, the proposed structure can be used for fast acquisition of the following signals:
- UMTS FDD slot synchronisation with a programmable number of non-coherent dwells
- general matched filter acquisition with a code length smaller than or equal to the maximum matched filter length. Note that by 'matched filter' is meant a FIR filter matched to the PN code. The acquisition time is the same as in the case of acquisition with a matched filter length equal to the code length. Non-coherent or coherent dwell over symbols is possible.
- matched filter aided acquisition for codes longer than the matched filter length. The acquisition time is approximately [code length/matched filter length] times longer than in case a matched filter equal to the code length is used.

The advantage of the invention is that the same structure can be used for the fast acquisition in the case of UMTS FDD slot synchronisation, S-UMTS slot synchronisation, GPS acquisition and general satellite acquisition. Moreover it can serve as a basis for UMTS TDD acquisition. The invention can be seen in the context of a growing need for mixed navigation and communication devices.

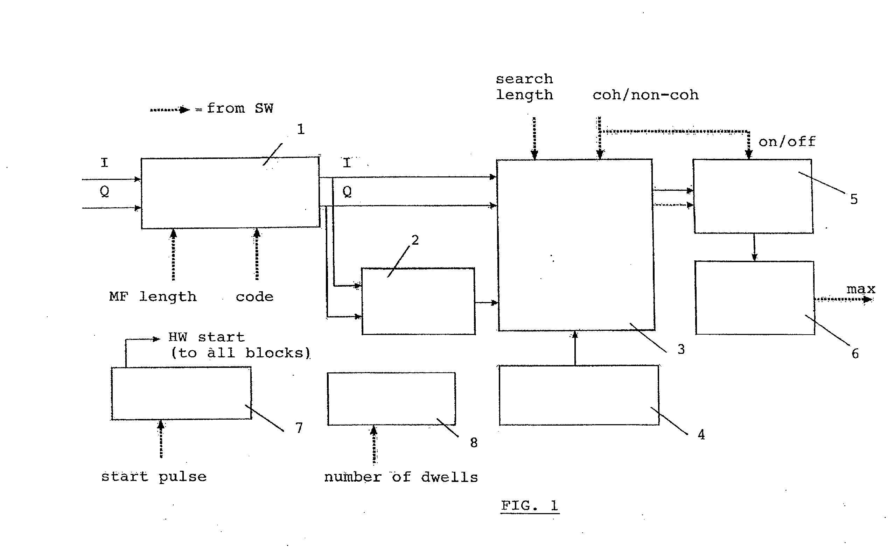

The structure is depicted in Figure 1. It consists of the following elements:
- matched filter with programmable length (1). This block is programmed with the PN code sequence of the signal to be acquired.
- a first energy calculation block (2) to calculate the energy of the samples output by the matched filter.
- accumulator with a programmable length (3). The length determines after how many samples the accumulator re-accumulates to the same locations in the RAM in the accumulator. Normally this length is set to the search space length. This can be different from the programmed matched filter length. It is possible to do either coherent or non-coherent accumulation (this is set by a programmable register).
- address generator (4) to generate the RAM accumulator address.
- software controller
- a second energy calculation block (5) to optionally calculate the energy of the accumulated values in the accumulator
- block (6) to find the maximum value (s) in the accumulator. The address of this maximal value indicates the accumulator address generator offset to the start of the signal to be acquired. So the goal of the acquisition is to obtain this address.
- hardware synchronisation counter (7) that support the SW so that the HW acquisition process can be started at precise defined moments or precise offsets from each other. The software start will be synchronised to this counter to generate the hardware start for the process. I.e. the hardware process will only start when this counter wraps.
- a dwell counter (8) to set the number of accumulations.

The structure can be used in three distinguished cases:

### A. Acquisition of codes with a length up to the maximum matched filter length with non-coherent dwell

The dwell counter is programmed with the number of dwells to do.

The matched filter length is set to the code length. The matched filter output is sent to the energy calculation block. So the accumulator input are energy values for the different phases of the incoming code.

The accumulator length is set according to the search space duration. The address generator will generate the addresses (number of different addresses equal to the programmed accumulator length). The accumulator is set to non-coherent mode. In this way the accumulator will accumulate non-coherently different energy values.

The optional energy calculation is not used in this mode.

Finally the maximum finder searches the maximum energy value and obtains the corresponding address.

### B. Acquisition of codes with a length up to the matched filter length with coherent dwell

This is the same as in case A, but the first energy calculation block is not used, the accumulator accumulates coherently and the last (optional) energy calculation is used when the maximum is searched.

### C. Acquisition of codes with a length larger than the matched filter length

To perform acquisition in this case, the PN code is considered to be the concatenation of several sub-codes. If we assume that the complete code is divided in X sub-codes, we must assume X hypotheses. The first hypothesis is executed as follows:
- the matched filter is programmed with one of the sub-codes and set to the respective length. A number of samples, coming directly from the matched filter, equal to this length, are stored in the accumulator. Just at the end of this, the matched filter code is switched to the next sub-code and the matched filter output during that length is accumulated coherently in the accumulator. After again exactly the sub-code length, the sub-code is switched again to the next sub-code, etc...
- when all the sub-codes are used like this, the maximum is found in the accumulator (using the optional energy calculation). The dwell counter is used to know when all subcodes have been processed.

The other hypotheses are executed in the same way, except for the fact that a different sub-code is used to start with. All hypotheses are started with an offset equal to an integer time the total code length.

The synchronisation counter is used to start the hypotheses with the correct offset. This counter is programmed using the length of the search space. If the software gives a start, this start will be synchronised with this counter.

In the two application examples that follow, the resolution of the acquisition block is assumed to be half a chip. However this might be higher or lower in particular implementations, but this has no impact on the structure of the hardware, only on the size of the hardware (i.e. size of the RAM). It is also assumed in these examples that the maximum matched filter length is at least 256 chips.

The first example deals with the acquisition of codes with length up to the length of the matched filter with non-coherent dwell. The UMTS FDD slot synchronisation (SCH 1) is used as an example.

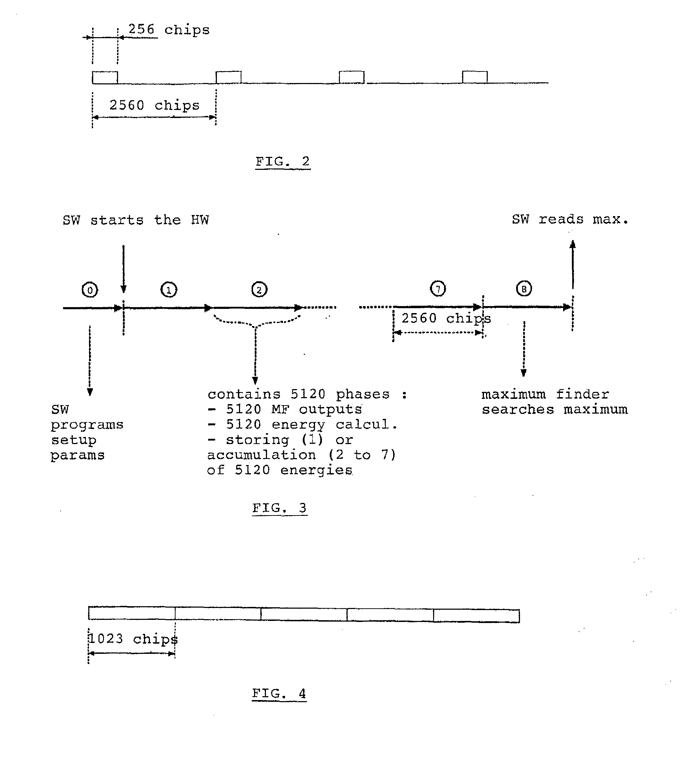

The signal to be acquired, coming into the receiver can be characterised in the following way (see Fig.2). It consists of a continuous repetition of slots of 2560 chips. Each slot contains an active part containing a PN code of length 256 and a part of 2304 chips where no signal is present. The goal of the acquisition is to find the beginning of the slots. This means the search space is 2560 chips.

What the HW basically will do, is to try all 2*2560 = 5120 possible phases by 'despreading with all these possible phases' and 'the best one' will indicate the correct phase (of the 5120 possible).

Despreading with all possible phases is done with the matched filter (FIR filter with the PN code as coefficients and as input the signal to be acquired). 'The best one' is where the most energy comes out of the matched filter.

Because the incoming received signal can be corrupted by noise, the despreader output will also be noisy. The smaller the S/N ratio, the more chance there is that the phase where the most energy comes out of the matched filter, is not the correct phase we are searching for. To 'solve' this problem, the signal is repeated after 2560 chips. The noise will be different. So instead of just looking at 1 slot and making a decision we might look at the average (=sum) energy for N consecutive slots for the same phase and then make the decision. This process is called *dwelling*. Because we are averaging (adding) energies, it is called non-coherent.

Fig. 3 shows how this is done in hardware. There are 3 large tasks:
A. Set up,
B. Filling accumulator RAM with matched filter energy
C. Maximum searching
In the set up task A the following happens:
- the SW programs the length of the matched filter to 256 chips (512 half chips).
- the SW programs the PN code of length 256 in the matched filter
- the SW programs the accumulator RAM to non-coherent, such that the optional energy calculation is switched off.
- the SW programs the accumulator length to 2560 chips (5120 half chips)
This is what is done during phase 0 in Fig.3. At the end of this phase the SW will trigger the HW blocks to start.

Task B consists of N phases, N being the number of dwells to be done (N=8 in the example). Each phase is exactly 5120 half chips long.
During each phase the following happens:
- the matched filter produces an output (complex number) every half chip (the despreading value for that particular phase)
- the energy of this complex number is calculated
- for phase 1 : the 5120 energy values are stored in the accumulator RAM on addresses 0 to 5119.
for phases 2 to 7 : the 5120 energy values produced during each phase, are accumulated to what was already present in the RAM on addresses 0 to 5119.
So during each phase the address generator goes from 0 to 5119.
At the end of phase 7, the RAM will contain 5120 numbers, and each of these numbers is the non-coherent accumulation of N energies. The dwell counter is used to know when the hardware should go from task B to C. Hence in this example the dwell counter will count 8 phases.

During task C the maximum finder block will read the RAM values, will search the maximum and return this value and the corresponding address to the SW. This address indicates how much the receiver needs to be rephased in order to be aligned with the incoming signal.

The second example illustrates the acquisition of codes with a length larger than the length of the matched filter. The acquisition of a GPS signal on the C/A (Coarse Acquisition) code is used as an example.
The signal to be acquired, coming into the receiver, consists of a continuous repetition of a PN code of 1023 chips (see Fig.4).

Again the HW will have to try all 2*1023 = 2046 possible phases and identify the best one. The main difference with the previous example is that the code length of 1023 chips is longer than the maximum length of the matched filter (assumed 256 chips).

This will require a different HW configuration and more SW control. It also means that non-coherent dwelling is not possible in HW, but must be executed in SW if desired.

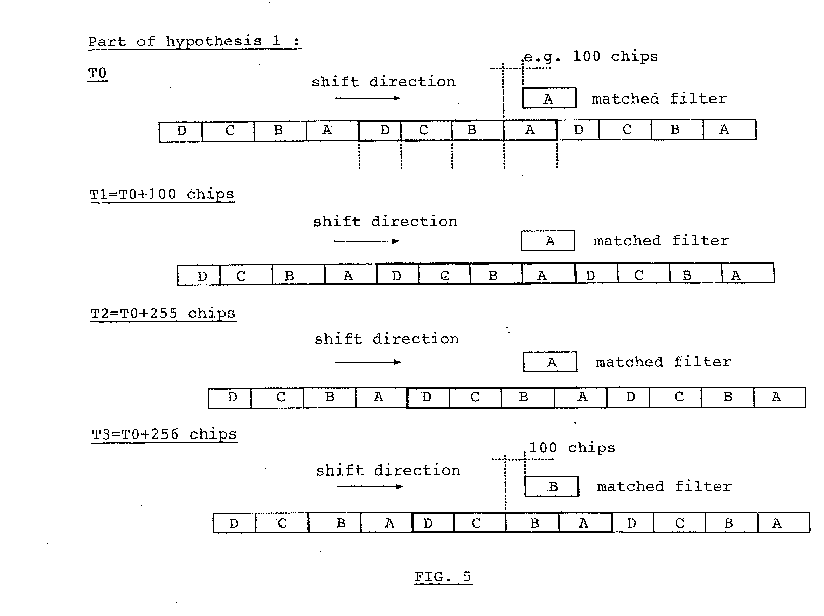

The principle used to cope with a length longer than the MF length is that the code of length 1023 is considered as a concatenation of several subcodes: 3 of length 256 (A, B and C) and one of length 255 (D) (see Fig.5). Note that in Fig.5 abstraction is made of half chips.

Suppose the acquisition process is started at T0 and subcode A is put in the matched filter. At T0 the incoming signal is delayed over 100 chips with respect to the matched filter. At T0+100 chips, subcode A of the received signal will match with the subcode in the matched filter. So there will be a correlation of 256 chips. But to obtain the complete processing gain we need correlation with 1023 chips. This is done as follows. At T0+255 chips subcode A is still in the matched filter, but then we switch to code B (T0+256). Again 100 chips later B will correlate. At T0+512 we switch the code from B to C and at T0+768 we switch to code D (and set the matched filter length to 255). If in the process just described one can add coherently the phases separated over 256 chips (e.g. add coherently the matched filter output of times T0+i, T0+i+256, T0+i+512, T0+i+768, with i=0.255) 256 numbers will result at the end, each being the sum of 1023 chips. In this example the number corresponding with i=100 will have the best match. Hence indicates the phase offset between the incoming signal and the Rx generated code.

The process described above clearly is not enough. We have only examined 256 of the 1023 possible phases. Suppose that in the figure the incoming signal was not delayed over 100 chips, but -156 chips (i.e. incoming signal 256 chips more to the right), and the above procedure was carried out.

It is clear one would never have correlation. It would have worked if we would have put subcodes BCDA instead of ABCD and we would have got again correlation with i=100.

So it is clear that 4 different 'hypotheses' are needed, with each a different phase in subcodes. In this way all possible phases will be examined.

Each hypothesis will give one maximum, the maximum of these 4 maxima is considered the correct one.

All hypotheses must of course start with a time offset of exactly a multiple of 1023 chips.

For the HW/SW this translates into the following process.

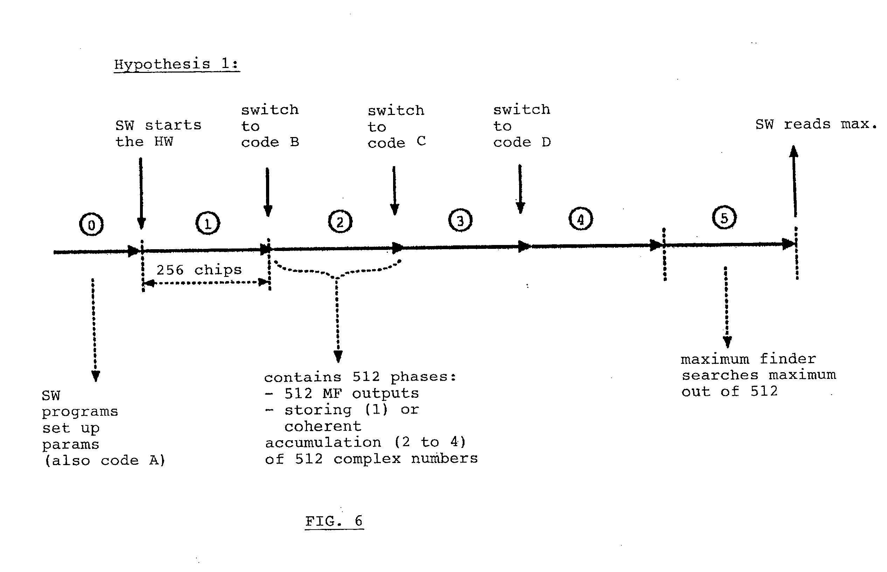

Fig.6 shows a time diagram of ONE hypothesis. There are 3 large tasks:
A. Set up,
B. Filling accumulator RAM with MF outputs
C. Energy calculation and maximum searching

In the set up task A the following happens:
- the SW programs the length of the matched filter to 256 chips (512 half chips).
- the SW programs the subcode A of length 256 in the matched filter
- the SW programs the accumulator RAM to 'coherent', so the optional energy calculation after the accumulator is turned on.
- the SW programs the accumulator length to 256 chips (512 half chips)
This is what is done during phase 0 in the figure.
At the end of this phase the SW will trigger the HW blocks to start.

Task B consists of 4 phases.
Each phase is exactly 512 half chips long.
During each phase there are the following steps:
- the matched filter produces an output (complex number) every half chip (the despread value for that particular phase).
- for phase 1 : the 512 complex values are stored in the accumulator RAM on addresses 0 to 511.
for phases 2 to 4 : the 512 complex values are accumulated to what was already present in the RAM on addresses 0 to 511.
So during each phase the address generator goes from 0 to 511.
- At the edge of each phase the subcode is switched in the matched filter. (SW programs this a bit in advance and the HW synchronises).
At the end of phase 4, the RAM will contain 512 complex numbers, and each of these numbers is the coherent accumulation of 1023 chips.

During task C the maximum finder block will read the values of the RAM, search the maximum and return this value and the address to the SW.

Note that the RAM contains complex numbers. So before going to the maximum finder still the energy needs to be calculated.

Now hypothesis 1 is finished and one has a value and address.

All other hypotheses are exactly the same except for the sequence of the subcodes to be programmed.

All hypotheses are started with exactly X*1023 chips in between by use of a HW synchronisation counter supporting the SW. This is done as follows: this supporting counter is programmed so that its period is equal to the search space length. If the software gives a start this start is synchronised with this counter so that the actual process will only start when this counter wraps. It is this hardware start that is depicted in the figures.

## Claims

1. A Programmable Acquisition Module for the acquisition of synchronisation signals in a spread-spectrum communication system, comprising
• a matched filter with programmable length (1)
• accumulator with RAM (3), using input either directly from said matched filter or via the first energy calculation block
• hardware synchronisation counter (7) that supports the SW such that the HW acquisition process can be started at precise defined moments
• a dwell counter (8)
• an address generator (4)
all arranged for control or programming by a software controller,
• a first energy calculation block (2)
• a second energy calculation block (5) to calculate the energy of the accumulated values
• a maximum finder block (6) to find the maximum energy value of the accumulated values,
whereby the accumulator (3), connected with the matched filter (1) both directly and via the energy calculation block (2), is arranged for getting inputs from the address generator and the software controller,
**characterised in that** the module is configurable for the acquisition of
- codes with a length up to the matched filter's maximum length with non-coherent dwell,
- codes with a length up to the matched filter's maximum length with coherent dwell, and
- codes with a length larger than the matched filter's maximum length.

2. A Programmable Acquisition Module as in claim 1, **characterised in that** the module is reconfigurable on the fly for the acquisition of said codes.

3. A programmable acquisition module as in claim 1 or claim 2,
**characterised in that** the module allows an acquisition of codes, selected from the group consisting of IMT-2000, 3GPP, 3GPP2, W-CDMA, UMTS/FDD, UMTS/TDD, 1xEV-DO, 1xEV-DV, CDMA2000, IS95, IS95A, IS95B, UWB, TD-SCDMA, LAS-CDMA, IEEE802.11, IEEE802.11A, IEEE802.11B, IEEE802.16 communications, GPS, Galileo, Glonass or GNSS.

4. An integrated circuit device, comprising a programmable acquisition module as in claim 1 or claim 2.

5. A receiver comprising a Programmable Acquisition Module as in claim 1, 2 or 3 or an integrated circuit device as in claim 4.

6. A method to perform the acquisition of a spread-spectrum signal, comprising the following steps :
• Receiving a signal selected from the group consisting of
- codes with a length up to the matched filter's maximum length with non-coherent dwell,
- codes with a length up to the matched filter's maximum length with coherent dwell, and
- codes with a length larger than the matched filter's maximum length,
• Applying the signal to a module such as in claim 1 and configuring the module to the received code.

7. The method according to claim 6, wherein the step of configuring the module to the received code comprises
• Setting the matched filter length,
• Setting the dwell counter length
• Setting the synchronisation counter length
• Setting the accumulator length,
• Setting the accumulator to coherent or non-coherent mode.

8. A method to perform the acquisition of a code with a length larger than the matched filter length, comprising the following steps:
• Providing a programmable acquisition module as in claim 1,
• Splitting said code into several subcodes, each of a length maximally equal to the matched filter length, whereby a concatenation of all subcodes, X in total, again yields the original code,
• Setting the dwell counter to the number of subcodes,
• Setting the synchronisation counter to the search space length,
• Investigating X hypotheses, each of which comprises the following steps:
(a) Programming the matched filter with the first subcode and also programming the matched filter length to the length of the first subcode,
(b) Setting the accumulator length to the matched filter length,
(c) Calculating the matched filter output and storing in the accumulator block,
(d) Switching, exactly after the length of the subcode, the code stored in the matched filter to the next subcode, and if needed change also the matched filter and accumulator length,
(e) Calculating the matched filter output and adding coherently in the accumulator,
(f) Repeating steps (d-e) for all other subcodes,
(g) Calculating the energy values, using the optional energy calculation block and finding the maximum energy value and the corresponding address for the hypothesis under investigation,
• The other X-1 hypotheses are obtained by cyclically shifting the order of the X subcodes,
• Finding the overall maximum energy value from the X maximum values resulting from the X hypotheses, and obtain the corresponding address and hypothesis number,
• Combining the address and hypothesis number to obtain the to be found PN phase.

9. A method to perform the acquisition of a code with a length up to the matched filter length, comprising the following steps:
(a) Providing a programmable acquisition module as in claim 1,
(b) Setting the matched filter length to the code length and programming the matched filter with the PN code,
(c) Setting the accumulator to coherent or non-coherent mode and programming the accumulator length equal to the search space,
(d) Setting a number of dwells in the dwell counter,
(e) In the case of a non-coherent dwell: setting the accumulator to non-coherent mode and passing the matched filter output to the first energy calculation block, which produces the accumulator input,
(f) In the case of a coherent dwell the matched filter output is the accumulator input,
(g) Calculating the matched filter output during the time equal to the search space,
(h) Accumulating or, during the first dwell, storing the accumulator input,
(i) Steps (g-h) are repeated for every dwell
(j) In the case of a coherent dwell calculating the energy values in the second energy calculation block,
(k) Finding the maximum energy and the corresponding address to be returned to the address generator (4).
